# EUROPÄISCHE PATENTSCHRIFT

(11) **EP 3 429 968 B1**
(45) Veröffentlichungstag und Bekanntmachung des Hinweises auf die Patenterteilung: **03.06.2020**
(21) Anmeldenummer: 17715393.9
(22) Anmeldetag: 14.03.2017
(51) Int. Cl.: C02F 9/00, C02F 1/00, C02F 1/24, C02F 1/44, C02F 1/469, C02F 1/52, C02F 3/12, C02F 3/28, C02F 3/30, C02F 3/00, C02F 101/16, C02F 103/32

(54) **MODULARES VERFAHREN UND ABWASSERBEHANDLUNGSANORDNUNG ZUR EFFIZIENTEN REINIGUNG VON ABWASSER**
MODULAR WASTE-WATER TREATMENT METHOD AND SYSTEM FOR EFFICIENT CLEANING OF WASTE-WATER
PROCÉDÉ ET DISPOSITIF POUR LE TRAITEMENT DE L'EAU POUR UN NETTOYAGE EFFECTIF DE L'EAU USÉE

(30) Priorität: 18.03.2016 DE 102016105071
(43) Veröffentlichungstag der Anmeldung: 23.01.2019
(73) Patentinhaber: Hochwald Foods GmbH, 54424 Thalfang (DE)
(72) Erfinder: GÖBEL, Falk, 01471 Radeburg (DE); WUTTKE, Thomas, 01768 Glashütte (DE)
(74) Vertreter: Sperling, Thomas
(86) Internationale Anmeldenummer: PCT/DE2017/100204
(87) Internationale Veröffentlichungsnummer: WO 2017/157388

(56) Entgegenhaltungen:
- EP-A1- 0 498 337
- WO-A1-2007/023170
- JP-B2- 2 871 369
- US-A1- 2015 353 397

## Beschreibung

Die Erfindung betrifft eine Abwasserbehandlungsanordnung und ein Verfahren zur effizienten Reinigung von unterschiedlich belasteten Abwasserteilströmen, insbesondere von Industrieabwässern.

Im industriellen Bereich müssen häufig große Abwassermengen aufbereitet werden, deren chemische Zusammensetzung sich grundlegend von denen kommunaler Abwässer unterscheidet. Oftmals sind die Produktionsabwässer hochbelastet mit organischen Verbindungen, Salzen oder auch toxischen Inhaltsstoffen oder durch schwankende pH- Werte gekennzeichnet. Je nach Produktionsverlauf können diese zeitlich stoßweise anfallen und dann zu erheblichen Schwierigkeiten bei der Abwasserreinigung, insbesondere in den biologischen Stufen, führen.
Die Überarbeitungen bei der Abwassergesetzgebung führten in den letzten Jahren zu einer Verschärfung der behördlich festgelegten Einleitergrenzwerte. Nicht selten erhöht sich dadurch der Aufwand für die Abwasserreinigung deutlich, so dass mitunter die Wirtschaftlichkeit des Gesamtprozesses in Frage gestellt werden muss.
Im Bereich kommunaler Abwässer werden meist biologische Verfahren eingesetzt, wie beispielsweise die biologische Phosphat-Elimination, Nitrifikation, Denitrifikation, die fallweise mit einer chemischen Phosphat-Fällung kombiniert werden.
Aufgrund der komplexen Zusammensetzung industrieller Abwässer sind diese klassischen Verfahrensschritte meist nicht ausreichend, um die geforderten Grenz- und Zielwerte zu erreichen. Deshalb werden zusätzliche Verfahren erforderlich.
Die DE 10 2008 050 349 B4 beschreibt ein Reinigungsverfahren, bei welchem das Abwasser zunächst Misch- und Ausgleichsbecken zugeführt wird, um die verschiedenen Abwasserströme zu vergleichmäßigen. Anschließend wird das Abwasser einer anaeroben Reinigung unterzogen, wobei organische Kohlenstoff- (C) Verbindungen zu Methan und Kohlendioxid verstoffwechselt werden. Die verbleibenden Phosphat- (P) und Stickstoff- (N) Verbindungen werden im nachfolgenden Reinigungsschritt als Magnesiumammoniumphosphat, auch als MAP bezeichnet, teilweise ausgefällt. Da diese Fällung nur innerhalb eines engen pH- Bereiches möglich ist, muss der pH- Wert eingestellt werden. Dazu bedient man sich nicht der allgemein üblichen Dosierung von Basen oder Säuren, sondern strippt nach Verlassen der anaeroben Stufe Kohlendioxid aus dem Abwasser aus. Da das Ammonium-Ammoniak - Gleichgewicht pH-abhängig ist, ermöglicht die Strippung ein Angleichen der Molenverhältnisse Magnesium : Ammonium : Phosphat. Diese Reinigungsstufen stellen im Wesentlichen eine Vorreinigung dar. Für die weitergehende Abwasserreinigung schließen sich aerobe Reinigungsverfahren an, welche im Beispiel als SBR- Technologie (SBR = *Sequencing-Batch-Reactor* es handelt sich um ein Belebtschlammverfahren) mit oder ohne zusätzlicher Phosphat- Fällung ausgeführt sind.

In der DD 294 003 A5 wird die Fällung von MAP aus Industrieabwasser beschrieben. Dafür werden Magnesiumchlorid und / oder Magnesiumoxid und Phosphorsäure zu dem Abwasser dosiert, um das geeignete lonenverhältnis einzustellen. Als wesentliches Merkmal der Erfindung ist ein Animpfen mit MAP-Impfkristallen benannt, was zur Erleichterung des Kristallisationsprozesses führt.

Eine Abwasserreinigungsanlage für Abwässer mit kolloidalen Wasserinhaltsstoffen wird in der DE 10 2013 110 303 A1 offenbart. Hier wird die Verfahrenskombination aus Flockung und Filtration beansprucht. Die Wasserinhaltsstoffe werden ausgeflockt und die Flocken mittels eines Filtrationsschrittes aus dem Abwasser entfernt. Das Filtrat wird anschließend einer Flotation unterworfen, die sowohl als Druckentspannungsflotation mit Hilfsmitteln oder als Elektroflotation ausgeführt werden kann.

Auch in der DE 10 2013 103 468 A1 wird die Reinigung von Abwässern mit schwankender elektrischer Leitfähigkeit mittels Elektroflotation beschrieben.

Ein weiteres Verfahren zum Abbau von organischen Schadstoffen beschreibt die DE 10 2009 036 080 A1. Das Abwasser wird hierbei zunächst aufkonzentriert. Daraus resultiert eine verminderte Abwassermenge. Anschließend wird das Konzentrat einer Filtrationsvorrichtung, beziehungsweise einer Umkehrosmose, zugeführt und danach mittels Elektrodialyse weiterbehandelt.
Da alle Inhaltsstoffe weiterhin im Konzentrat vorhanden sind, muss jedoch mit einem schnellen Verschleiß der eingesetzten Membranen gerechnet werden.

Die DE 43 14 521 beschreibt ein Verfahren zur Reinigung organisch belasteter Industrieabwässer mittels einer Kombination aus Wasserstoffperoxid H2O2 und Eisen-II Fe(II) oder Eisen-III Fe(III), allgemein bekannt als Fenton Reagenz. Die schwer abbaubaren organischen Verbindungen werden dadurch oxidiert.

In der DE 38 11591 A1 wird ein Verfahren für die Aufbereitung hochbelasteter Wässer aus der Altlastensanierung beschrieben. Das Wasser wird mit einem Tensid versehen, wobei die korrekte Einstellung des pH- Wertes erforderlich ist. Anschließend wird das Wasser in mindestens zwei hintereinandergeschalteten Reaktionsräumen einem Belebtschlammverfahren unterworfen. Bei leicht kontaminierten Abwässern können die schädlichen Wasserinhaltsstoffe zuvor mittels Umkehrosmose angereichert werden. Auch ist offenbart, dass eine anaerobe Stufe vorgeschaltet werden kann, in die der Überschuss an Belebtschlamm zurückgeführt werden kann. Das Verfahren kann auch mit chemischen Reinigungsschritten kombiniert werden. Das Ziel besteht darin, dass durch die eingesetzten Tenside Emulsionen aufgespalten werden sollen. Nachteilig bei diesem Verfahren ist allerdings, dass aus Sicht des Umweltschutzes Tenside eher kritisch zu bewerten sind.

Eine Vorrichtung zur Reinigung hochbelasteter Abwässer, bestehend aus einem im Aufstrom betriebenen anaeroben Festbettfilter mit nachgeschalteter Elektroflockulationszelle ist in der DE 20 2008 011 162 U1 beschrieben. Durch diese Anordnung werden zunächst organische Verbindungen anaerob abgebaut. Die dabei frei werdenden Phosphorverbindungen werden unter Zuhilfenahme eines elektrischen Feldes ausgeflockt. Dabei werden chemische Fällmittel eingespart, allerdings ist der Energiebedarf der Elektroflockulation erfahrungsgemäß sehr hoch, was bei den stetig steigenden Energiepreisen nachteilig ist.

Einen Prozess zur Reinigung von Abwässern der Nahrungsmittelindustrie beschreibt die US 5,514,282. Das Abwasser wird zunächst in einem Tank vergleichmäßigt. Anschließend wird ein Sieb passiert und Grobstoffe entfernt. Daran schließt sich eine Flotationsstufe an, in der feine partikuläre Stoffe ausgeflockt werden. Die Flocken werden durch Filter unterschiedlicher Porenweiten abgetrennt. Das Permeat wird abgeleitet. Diese Anordnung ist geeignet, um partikuläre Wasserinhaltsstoffe abzutrennen. Gelöste Stoffe und Ionen werden nur unzureichend erfasst und erreichen somit mit dem abgeleiteten Permeat den Vorfluter. Bei großen Abwasserströmen müssen die Filtrationseinrichtungen entsprechend groß dimensioniert werden, was hohe Membran- und Energiekosten zur Folge haben kann.

In der KR 10 10 30 787 B1 ist eine Anordnung zur Reinigung von Färbereiabwasser beschrieben, wobei ein Tank zum Neutralisieren, ein Lagertank, ein Reaktionstank für die aerobe Behandlung, ein Koagulationstank und ein Sedimentationstank nacheinander durchströmt werden. In dieser Anordnung werden chemische und biologische Prozesse miteinander kombiniert. Färbereiabwässer sind häufig mit schwer abbaubaren färbenden Verbindungen behaftet, die ohne eine aufwändige Vorbehandlung kaum biologisch abbaubar und ausfällbar sind. Nachteilig ist, dass nicht jegliche Arten von Färbereiabwässern mit dieser Anordnung effektiv gereinigt werden können.

Die KR 10 2006 100 698 A beschreibt dagegen eine Methode für die Behandlung von Sickerwässern, die bei der Lagerung von Abfällen der Nahrungsmittelindustrie anfallen. Diese Wässer werden zunächst einer fest/flüssig- Trennung mittels Sedimentation oder Flotation unterzogen. Anschließend wird das Wasser nach pH- Regulation einem Anaerobreaktor zugeführt, in dem organische Kohlenstoffverbindungen abgebaut werden. Dadurch werden der chemische Sauerstoffbedarf CSB und der biologische Sauerstoffbedarf BSB5 im Abwasser vermindert. In einem nachfolgenden aeroben Prozess werden Ammoniumionen nitrifiziert. Nicht abbaubare Stoffe, wie zum Beispiel Phosphate und abgetriebene Belebtschlammpartikel, werden letztlich durch Koagulation und/ oder Flotation entfernt.

Aus EP 0 498 337 A ist ein Verfahren zur Gülle-Entsorgung bekannt. Das Verfahren umfasst eine forcierte enzymatische Hydrolyse von in der Gülle enthaltenen Harnstoffes zu Ammoniumcarbonat, eine Flockung von suspendierten und kolloidal gelösten Inhaltsstoffen, eine Flotation von Flocken durch Zersetzung des gelösten Ammoniumcarbonates, ein Austreiben von Ammoniak sowie ein Einspeisen der nunmehr stickstoffarmen Restflüssigkeit in die Denitrifizierungsstufe einer Kläranlage, wobei vor der Einspeisung in eine Kläranlage eine Elektrodialysestufe vorgesehen sein kann, um das Abwasser zu konzentrieren.

Bei allen angegebenen Verfahren werden die Abwasserströme entweder in großen Tanks gesammelt und vergleichmäßigt oder es werden durch teure Filtrationsverfahren die Wasserinhaltsstoffe aufkonzentriert, so dass letztlich kleinere Volumina behandelt werden müssen.
Die im Verfahrensablauf nachfolgenden Reinigungsstufen behandeln dann immer den gesamten Abwasserstrom. Insbesondere dann, wenn mehrere Abwasserteilströme mit stark voneinander abweichenden Abwasserzusammensetzungen anfallen, ist dies von Nachteil.

Die Aufgabe der Erfindung besteht darin eine Anordnung und ein Verfahren zu entwickeln, die es erlaubt, unterschiedlich belastete Abwässer effizient zu reinigen.

Die Aufgabe wird durch eine Anordnung und ein Verfahren mit den Merkmalen der selbstständigen Patentansprüche gelöst. Weiterbildungen sind in den abhängigen Patentansprüchen angegeben.
Die Aufgabe wird insbesondere durch eine Abwasserbehandlungsanordnung zur effizienten Reinigung von unterschiedlich belasteten Abwasserteilströmen gelöst, welche durch die folgenden Kompenenten gekennzeichnet ist:
- Eine Elektrodialyseeinheit
- Einen Havariespeicher,
- Einen Pufferbehälter, wobei
- der Pufferbehälter von Abwasserteilströmen indirekt über die Elektrodialyseeinheit und direkt erreichbar ausgebildet ist und dass
- der Pufferbehälter von den Abwasserteilströmen indirekt über den Havariespeicher und direkt erreichbar ausgebildet ist und dass
- Nach dem Pufferbehälter ein erster Flotationsbehälter, ein Anaerobreaktor und eine SBR-Einheit vor dem Ablauf in Reihe geschaltet angeordnet sind.

Bevorzugt ist parallel zum Havariespeicher ein Denitrifikationsbehälter mit nachgeschaltetem zweiten Flotationsbehälter angeordnet ist, wobei der zweite Flotationsbehälter mit dem Havariebehälter und/oder dem Pufferbehälter verbunden ausgeführt ist.

Vorteilhaft ist zwischen dem Anaerobreaktor und der SBR-Einheit eine MAP-Fällungseinheit mit einer MAP Magnesiumammoniumphosphatverwertung angeordnet.

Nach Elektrodialyseeinheit sind vorteilhaft ein Konzentratpufferbehälter und/oder nach dem ersten Flotationsbehälter ein Flotatpufferbehälter und/oder nach dem Anaerobreaktor eine Gasbehandlung, Gasverwertung, Blockheizkraftwerk (BHKW) angeordnet.
Die MAP-Fällungseinheit und/oder die SBR-Einheit sind bevorzugt zweistraßig für das wechselweise Betreiben der Einheiten für den quasikontinuierlichen Betrieb ausgebildet.

Vorteilhaft sind ein Schlammpufferbehälter und/oder ein Ablaufspeicher vom Ablauf für das Klarwasser nach der SBR-Einheit angeordnet.
Der Ablaufspeicher ist bevorzugt derart dimensioniert, dass im Regelbetrieb der Abwasserbehandlungsanordnung die Anlage nur zu 50 % befüllt ist.
Zwischen dem Ablaufspeicher ist eine Rückpumpleitung für den Havariefall in den Havariespeicher angeordnet.
Die Aufgabe der Erfndung wird weiterhin durch ein modulares Verfahren zur effizienten Reinigung von unterschiedlich belasteten Abwasserteilströmen in einer Abwasserbehandlungsanordnung gelöst, welche dadurch gekennzeichnet ist, dass eine separate Erfassung der einzelnen Abwasserteilströme durchgeführt wird und dass die Abwasserteilströme als Teilströme modular separat behandelt und je nach Beschaffenheit nachfolgend zusammengeführt und weiterbehandelt werden.
Bevorzugt wird das Verfahren dadurch weitergebildet, dass in Abhängigkeit der Eigenschaften des Abwasserteilstromes
a) Eine Elektrodialyse zur Reduzierung der Chloridfracht um 1/3 und der Kaliumfracht um 2/3 gegenüber dem Ausgangswert nur für einen Abwasserteilstrom erfolgt,
b) Eine Flotation von ungelösten Stoffen erfolgt,
c) Eine anaerobe Abwasserbehandlung zur Erzeugung von Biogas als Wertstoff aus einem salzreichen Substrat erfolgt,
d) Eine MAP- Fällung zur Erzeugung von Magnesiumammoniumphosphat als Wertstoff erfolgt und dass
e) Eine aerobe Abwasserbehandlung im SBR- Verfahren unter weitergehender P- Elimination in einem salzreichen Substrat erfolgt.

Bevorzugt wird der behandelte Abwasserstrom vor dem Ablauf filtriert.

Weiterhin vorteilhaft ist eine Abluftbehandlung sowie eine Entschwefelung des bei der anaeroben Abwasserbehandlung entstehenden Biogases vorgesehen.

Besonders vorteilhaft ist in Verfahrensschritt b) eine Druckentspannunsflotation vorgesehen. Alternativ kann bei entsprechenden Randbedingungen auch eine Elektroflotation oder ähnliche Verfahren Anwendung finden.

Es werden nach einer weiteren vorteilhaften Ausgestaltung des Verfahrens in Abhängigkeit gemessener Phosphorkonzentrationen mittels simultaner Fällung weitere Phosphorverbindungen eliminiert.

Die Aufgabe wird konzeptionsgemäß folgendermaßen gelöst:
Es hat sich gezeigt, dass sich komplex zusammengesetzte Industrieabwässer mit der nachfolgend beschriebenen Anordnung und Verfahrensweise gezielt und kosteneffizient teilbehandeln lassen, wodurch die nachfolgenden, dem Stand der Technik entsprechenden Reinigungsschritte, deutlich entlastet sind beziehungsweise kleiner dimensioniert werden können. Dies führt in Summe zu einer höheren Sicherheit bei der Abwasserreinigung bei gleichzeitiger Kosteneinsparung.
Nach einer vorteilhaften Ausgestaltung der Erfindung werden die im Produktionsprozess anfallenden Abwässer zunächst an ihrem Anfallsort erfasst. Abwasserströme mit ähnlicher Zusammensetzung werden beispielsweise in Zwischentanks vereint. Anschließend werden gering mit anorganischen Stoffen belastete Abwässer, Abwässer mit hoher anorganischer Belastung, wie CIP-Wässer, die häufig mit einwertigen Ionen belastet sind, mit organischen Stoffen in normalem Umfang belastete Wässer und stark mit organischen Stoffen belastete Wässer, zum Beispiel im Havariefall abgeschwemmtes/ ausgetretenes Produkt mit extrem hoher Sauerstoffzehrung, in getrennten Leitungen der Industrieabwasserreinigungsanlage zugeführt.
Die Abwässer mit hoher anorganischer Belastung werden in der Industrieabwasserreinigungsanlage zunächst einer Elektrodialysevorrichtung zugeführt, mit deren Hilfe meist nicht chemisch ausfällbare einwertige Ionen aus dem Abwasser entfernt werden. Das dadurch von einem Großteil der störenden Ionen befreite Abwasser kann nun direkt einer biologischen Reinigungsstufe zugeführt werden, ohne dass die Mikroorganismen durch das Salz und dem damit verbundenen hohen osmotischen Druck in ihrer Stoffwechselaktivität beeinträchtigt werden.
Das gering mit anorganischen Stoffen, auch Anorganik genannt, belastete Abwasser kann gegebenenfalls nach Zwischenspeicherung in einem Behälter ebenfalls direkt einer biologischen Reinigungsstufe zugeführt werden.
Der Abwasserstrom mit normaler organischer Belastung wird einem separaten Speichertank zugeführt, aus dem die nachgeschalteten Reinigungsstufen der Industrieabwasserreinigungsanlage kontinuierlich gespeist werden.
Ein Abwasserstrom mit hoher organischer Belastung, der lediglich im Havariefall anfällt, wird in einen bezogen auf den Havariefall großzügig bemessenen Behälter gepumpt. Dieser ist neben einer Umwälzeinrichtung zusätzlich mit dem Ablaufspeicher verbunden, welcher das gereinigte Abwasser vor dessen Einleitung in den Vorfluter vergleichmäßigt. Der Ablaufspeicher kann bei Ausfall von Reinigungsstufen somit zusätzlich noch als Havariespeicher fungieren. Aus diesem Havariespeicher wird das Abwasser frachtgesteuert in die nachgeschaltete Reinigungsstufe gespeist, um diese nicht zu überlasten.
Abwässer mit hohen Nitratkonzentrationen werden wiederum einem zusätzlichen Behälter zugeführt und in diesem denitrifiziert. Damit die aktive Biomasse nicht mit dem Abwasserstrom ausgeschwemmt wird, ist dieser Denitrifikationsbehälter mit einer Flotationsvorrichtung versehen. Damit wird die Biomasse aus dem Abwasser abgeschieden und in den Denitrifikationsprozess zurückgeführt. Denitrifikationsbehälter und zugehörige Flotation bilden einen internen Kreislauf.

Alle Speicherbehälter sind mit einer Vorrichtung zum Umwälzen des Wasservolumens, wie beispielsweise Pumpen oder Rührwerke, ausgestattet, um Sedimentation partikulärer Abwasserinhaltsstoffe zu verhindern.
Der Behälter für die vorgeschaltete Nitrifikation ist zusätzlich noch mit einer Begasungsvorrichtung für Luft oder Sauerstoff ausgestattet. Dies wird für die Erhaltung des Belebtschlammes erforderlich, da die hier zu behandelnden Abwässer diskontinuierlich anfallen, also Zeiten ohne Substratzufuhr überbrückt werden müssen.

Alle Behälter sind mit einer Vorrichtung zur Abluftbehandlung versehen. Zudem ist der Behälter für die vorgeschaltete Denitrifikation über eine Leitung mit der aeroben Reinigungsstufe verbunden, so dass im Bedarfsfall Belebtschlamm, also aktive Biomasse, zugeführt werden kann, da hohe Frachtspitzen an Abwasserinhaltsstoffen häufig auch eine große Menge aktiver Biomasse für eine Reinigung erfordern. Durch dieses Animpfen lässt sich sehr viel schneller die erforderliche Menge an aktiven Mikroorganismen bereitstellen als durch Anzüchten im Behälter selbst.

Die Grundkonzeption der Erfindung besteht darin, dass einzelne Abwasserteilströme je nach deren Zusammensetzung variabel und kosteneffektiv vorbehandelt werden.

Durch die separate Erfassung der einzelnen unterschiedlich belasteten Stoffströme ist es möglich, hochbelastete Anteile des Gesamtabwassers, deren Aufbereitung erfahrungsgemäß sehr aufwändig und kostenintensiv ist, auszuschleusen. Somit müssen lediglich kleinere Volumina mit speziellen Verfahren, wie zum Beispiel mit Elektrodialyse, gereinigt werden, was sich in geringerem Platzbedarf für die baulichen Anlagen, sowie in geringeren Kosten für Behälterbau, Verbrauchsmittel und Energiebedarf widerspiegelt.

Der modulare Aufbau und eine intelligente Verschaltung der einzelnen Behälter miteinander ermöglichen es, bei Störungen im Betriebsablauf, in der Produktion oder bei Havarien die anfallenden Abwässer zwischenzuspeichern und gezielt entsprechend der Wasserinhaltsstoffe aufzubereiten oder gegebenenfalls einer Entsorgung zuzuführen.
Somit fungiert das entwickelte System zur Abwasservorbehandlung gleichzeitig auch als Havariesystem. Ein zusätzlicher, entsprechend groß bemessener Havariebehälter ist somit nicht mehr erforderlich.
Ein Havariesystem für Abwasserreinigungsanlagen wird auch in Zukunft weiter an Bedeutung gewinnen, wenn die Vorfluter die in verschärften gesetzlichen Bestimmungen geforderten Gütekriterien konsequent erreichen und einhalten sollen.

Die Anordnung einer Denitrifikationsstufe als Abwasservorbehandlungsschritt hat den Vorteil, dass Nitrat- Konzentrationsspitzen im Industrieabwasser, welche in der Lebensmittelindustrie während der Reinigungsprozesse recht häufig auftreten, mikrobiell abgebaut werden können und andere biologische Reinigungsschritte nicht negativ beeinflussen. Somit lässt sich die Anaerobstufe in kleinerer Ausführung errichten und mit höherer Sicherheit betreiben, da toxische Nitrat- / Nitritfrachten bereits vor der Beschickung des Fermenters vermieden werden. Auf Redundanz dieser anaeroben Verfahrensstufe kann verzichtet werden, da eine der nachgeschalteten Verfahrensstufen, die SBR-Aerobie mit der Möglichkeit einer zusätzlichen chemischen Fällung von vornherein größer ausgelegt wurde und bei Wartungsarbeiten am Fermenter wahlweise auch eine höhere Reinigungsleistung erbringen kann.

Zudem wird bei extrem stickstoffbelasteten Abwässern durch die vorgeschaltete Denitrifikation die Gesamt- Stickstofffracht vermindert und somit günstigere lonenverhältnisse für die MAP- Fällung eingestellt. Somit ist es nicht mehr erforderlich, Phosphorsäure zusätzlich zu dosieren.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörige Zeichnung.

Nach einem exemplarischen Ausführungsbeispiel der Erfindung wird eine in Betrieb befindliche Industrieabwasserreinigungsanlage beschrieben, mit welcher 2300 m³/d an Produktionsabwässern eines Trockenwerkes, welche der Herstellung von demineralisierter Trockenmolke dient, zur Direkteinleiter-Qualität aufbereitet werden.

Gemessen an der erforderlichen Reinigungsleistung für die im Abwasser enthaltene Fracht entspricht diese Anlage einer Kläranlage der Größenklasse 5 nach der Abwasserverordnung AbwV, was mehr als 100.000 Einwohnerwerte entspricht.

Das zu behandelnde Produktionsabwasser des Trockenwerkes, der Abwasserteilstrom 20, ist gekennzeichnet durch hohe Salzfrachten, hohe Nährstoffgehalte und hohe organische Frachten. Dabei fallen je nach Verarbeitungsschritt Wässer unterschiedlicher Zusammensetzung an:
ca. 600 m³/d geringer belastetes Abwasser 24 aus den Spülvorgängen der Demineralisierung
ca. 500 m³/d hoch belastetes Abwasser 20 aus der Demineralisierung
ca. 500 m³/d überwiegend mineralisch belastetes Abwasser 22, 23 (Brüden, CIP-Wässer aus den Reinigungs- und Spülschritten)
ca. 700 m³/d Molkereiabwässer 21 mit hoher organischer Fracht

Sanitär- und Straßenabwässer werden separat gesammelt und im beschriebenen Fall einer kommunalen Kläranlage zugeführt. Somit können zum Beispiel alle auf der Industrieabwasserreinigungsanlage anfallenden Schlämme ihrem Ursprung nach der Lebensmittelindustrie zugeordnet werden, was eine spätere Verwertung erheblich erleichtert.

Die Produktionsabwässer werden der Industrieabwasserreinigungsanlage in separaten Leitungen 20, 21, 22, 23, 24 zugeführt, welche in insgesamt sechs Behälter 6.1, 7.1, 8.1, 2, 9, 10 eingespeist werden können.
Alle stark mit meist anorganischen Stoffen belasteten Abwasserteilströme 22, die aus der Regeneration der Kationenaustauscher des Trockenwerkes stammen, werden in einem Behälter 6.1 zwischengespeichert und aus diesem zunächst einer Elektrodialyseeinheit 1 zugeführt.
Das vom Anionenaustauscher des Produktionswerkes stammende Wasser 23 wird in Behälter 7.1 zwischengespeichert und von dort der Elektrodialyseeinheit zugeführt. Das aus den Rückspülvorgängen der Umkehrosmoseeinheit 8 des Trockenwerkes stammende Wasser 24 wird in Behälter 8.1 zwischengespeichert und von dort der Elektrodialyse zugeführt. Der Abwasserteilstrom 24 kann gegebenenfalls aus dem Umkehrosmoseeinheitpufferbehälter 8.1 bei entsprechender Zusammensetzung auch direkt dem Pufferbehälter 2 zugeführt werden. Alternativ wird dieser Abwasserteilstrom 24 in die Elektrodialyseeinheit 1 geführt, um den pH- Wert zu regulieren.

Das Abwasser aus der Käserei, der Zulauf 21, wird gleichfalls in den eigenständigen Pufferbehälter 2 eingespeist, aus welchem das Abwasser direkt frachtgesteuert einem ersten Flotationsbehälter 11 zugeführt wird.

Aus Havarien stammende hochbelastete Produktabwässer werden in dem Havariespeicher 9 abgefangen und aus diesem frachtgesteuert in den Pufferbehälter 2 gepumpt. Somit ist gewährleistet, dass Frachtspitzen nicht unnötig die biologischen Reinigungsstufen belasten.
Ein Ablaufspeicher 18, der zur Gewährleistung des Q24 vor Einleitung des gereinigten Abwassers über den Ablauf 19 in den Vorfluter dient, kommuniziert über eine nicht dargestellte Rohrleitung mit dem Havariespeicher 9. Diese Verschaltung erlaubt ein Rückpumpen und Zwischenspeichern von unzureichend gereinigten Abwasseranteilen, zum Beispiel bei Schlammabtrieb im Rahmen einer technischen Störung an einer der SBR- Anlagen, und dient somit direkt dem Gewässerschutz. Der Ablaufspeicher 18 ist so dimensioniert, dass er im Regelbetrieb der Anlage lediglich zu 50 % befüllt ist, somit bestehen zusätzliche Reserven für den Havariefall.
Abwässer mit sehr hohen Nitratkonzentrationen werden zum Schutz der nachfolgenden Anaerobstufe direkt einem weiteren separaten Denitrifikationsbehälter 10 zugeführt, der als der eigentlichen Abwasserreinigung vorgeschaltete, kleine separate Denitrifikationsstufe dient. Das so denitrifizierte Abwasser wird in den Pufferbehälter 2 über einen zweiten Flotationsbehälter 12 eingespeist. Der Denitrifikationsbehälter 10 ist mit dem Flotationsbehälter 12 verbunden, um den für die Denitrifikation erforderlichen Belebtschlamm abzutrennen und im System zu halten. Dieser zweite Flotationsbehälter 12 ist mit dem Denitrifikationsbehälter als eine Einheit zu betrachten und zusätzlich zum ersten Flotationsbehälter 11 in der Gesamtanordnung vorgesehen.

Ein besonderer Vorteil der Anordnung und des Verfahrens besteht darin, dass die dargestellte separate Erfassung der einzelnen Abwasserströme eine weitere zielgerichtete und kostensparende Behandlung ermöglicht.

Die Verfahrensschritte sind dabei nach einer bevorzugten Ausführung die Folgenden:
a) Elektrodialyse (Reduzierung der Chloridfracht um 1/3 und der Kaliumfracht um 2/3 gegenüber dem Ausgangswert) - nur für einen Abwasserteilstrom
b) Flotation von ungelösten Stoffen
c) Anaerobe Abwasserbehandlung (Erzeugung von Biogas als Wertstoff aus einem salzreichen Substrat)
d) MAP- Fällung (Erzeugung von Magnesiumammoniumphosphat als Wertstoff)
e) Aerobe Abwasserbehandlung in SBR- Reaktoren (weitergehende P-Elimination in einem salzreichen Substrat)
f) Abwasserfiltration (kann optional betrieben werden)

Daneben erfolgen eine Abluftbehandlung sowie die erforderliche Entschwefelung des bei der anaeroben Abwasserbehandlung entstehenden Biogases.

Die Teilströme der Zuläufe 22, 23, 24, die überwiegend hohe Konzentrationen an anorganischen Salzen enthalten, werden der Elektrodialyseeinheit 1 zugeführt, wobei die Ionen über monovalente Membranen aufkonzentriert und in den Konzentratpufferbehälter 5 ausgeschleust werden.
Da die anorganisch hochbelasteten Stoffströme 22, 23, 24 bereits im Trockenwerk separat erfasst werden, kann dieser Verfahrensschritt kosten- und energieoptimiert erfolgen. Eine Belastung des von der Elektrodialyseeinheit zu behandelnden Abwassers mit organischen Stoffen aus anderen Stoffströmen würde zur Verblockung der Membranen und damit zu höheren Betriebskosten führen.

Im Anschluss wird das nun von Salzen abkonzentrierte Abwasser in dem Pufferbehälter 2 mit den anderen mit geringen Salzkonzentrationen befrachteten Abwässern 20 des Trockenwerkes und den gering mit Salzkonzentrationen befrachteten Abwässern 21 der Käserei vereint und, nicht dargestellt, direkt der SBR- Einheit 17 zur aeroben Weiterbehandlung zugeführt.

Die Trockenwerksabwässer des Zulaufes Trockenwerk 20, die stark mit organischen Verbindungen, wie zum Beispiel Molkeprotein und ungelösten Stoffen verunreinigt sind, werden direkt in den Pufferbehälter 2 eingeleitet und aus diesem frachtgesteuert dem ersten Flotationsbehälter 11 zugeführt.

Die Flotation im ersten Flotationsbehälter 11 ist als Druckentspannunsflotation ausgeführt. Unter Zuhilfenahme von Flockungsmitteln wird in dieser Reinigungsstufe ein Teil des CSB entfernt. Das Flotat wird dem Flotatpufferspeicher 4 und danach einer Schlammverwertung zugeführt.

Das aus dem ersten Flotationsbehälter 11 ablaufende Wasser wird einem Anaerobreaktor 14 zugeführt. In diesem Anaerobreaktor wird der größte Teil des CSB abgebaut und zu Biogas umgesetzt. In der beschriebenen Industrieabwasserreinigungsanlage wurde ein R2S- Reaktor verwendet, der auf der Basis granulierter Biomasse arbeitet. Es kann aber auch jede andere Anaerobtechnologie zum Einsatz kommen, die mit Bakterienrückhalt im Fermenter arbeitet.
Systeme mit immobilisierter Biomasse sind erfahrungsgemäß unempfindlicher gegenüber Konzentrationsschwankungen. Außerdem ist im System immer genügend aktive Biomasse vorhanden, so dass auch bei geringem Trockensubstanzgehalt kurze Verweilzeiten realisierbar sind. Abwasser besitzt im Vergleich zu den klassischen Biogassubstraten deutlich niedrigere Trockensubstanzgehalte. Zudem entstehen bei anaeroben Verfahren nur geringe Mengen an Biomassezuwachs in Form von Überschussschlamm.

Der anfallende Gärrest wird einer landwirtschaftlichen Verwertung zugeführt.

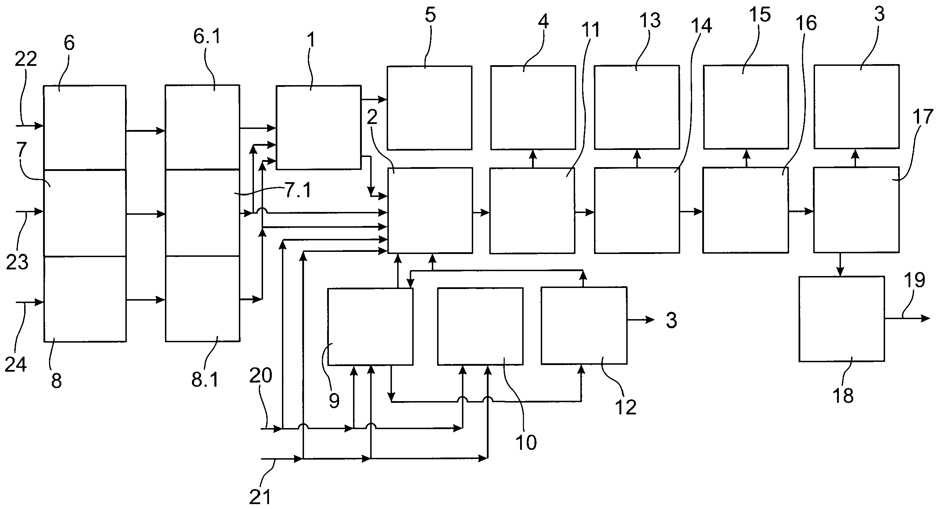

Das Biogas wird mittels alkalischer Gaswäscher entschwefelt. Alternativ dazu sind aber auch andere Entschwefelungsverfahren, zum Beispiel die biologische Entschwefelung, einsetzbar. Dabei wird das im Biogas enthaltene H2S zu Natriumsulfid beziehungsweise Natriumhydrogensulfid umgesetzt und in die wässrige Phase gebracht. Das gereinigte Gas wird nach Trocknung und Nachreinigung über Aktivkohle anschließend im BHKW verstromt, wobei die entstehende elektrische Energie für die Industrieabwasserreinigungsanlage betriebsintern genutzt wird. Diese Prozessschritte sind mit der Gasbehandlung, Gasverwertung BHKW 13 in der Figur zusammengefasst. Somit wird als zusätzlicher Vorteil die Abhängigkeit vom Stromanbieter verringert.

Nach Verlassen des Anaerobreaktors 14, dem R2S- Reaktor, wird das Abwasser einer redundant ausgeführten Magnesium- Ammonium- Phosphat - Fällstufe, der MAP-Fällungseinheit 16, zugeführt.
Da alle Abwässer aus der Lebensmittelindustrie stammen, ist das ausgefällte Magnesiumammoniumphosphat sehr rein und kann als Wertstoff in einer als MAP Magnesiumammoniumphosphatverwertung 15 bezeichnet, vermarktet werden. Die daraus erzielbaren Erlöse verringern die Gesamtkosten, die zur Abwasserreinigung anfallen.

Der Ablauf aus der MAP- Fällungseinheit 16 wird anschließend im Belebungsverfahren aerob weiterbehandelt. Dabei kommen zwei SBR-Einheiten 17 zum Einsatz, die wechselseitig beschickt werden. Zusätzlich wurden die Reaktoren mit Fäll-/ Flockungsmittel- Dosierstationen bestückt, so dass je nach gemessener Phosphorkonzentration die Möglichkeit besteht, mittels simultaner Fällung weitere Phosphorverbindungen zu eliminieren.
Hier laufen die Prozessstufen biologische P-Eliminierung mit oder ohne simultaner P-Fällung, Nitrifikation und Denitrifikation im selben Reaktionsraum in zeitlich gestaffelter Reihenfolge nacheinander ab.
Der überschüssige Belebtschlamm wird in einem Schlammpufferbehälter 3 zwischengespeichert und anschließend maschinell entwässert und einer landwirtschaftlichen Verwertung zugeführt.
Der Klarablauf der SBR- Einheiten 17 wird über den Ablaufspeicher 18 und den Ablauf 19 in den Vorfluter abgeleitet.
Die aerobe Reinigungsstufe der SBR-Einheit 17 wurde so ausgelegt, dass auch bei Ausfall der Anaerobstufe, beispielsweise durch kurzzeitige Stilllegung zu Wartungszwecken, oder Ausfall der MAP-Fällungseinheit 16 die erforderliche Reinigungsleistung erbracht werden kann, was jedoch mit einem höheren Aufwand verbunden ist.

Der Klarablauf der SBR- Einheit 17 wird im Bedarfsfall noch einer zusätzlichen nicht dargestellten Abwasserfiltration zugeführt, bei der weiterer organisch gebundener Phosphor entfernt wird. Das Rückspülwasser der Filtration wird in die SBR- Einheiten 17 zurückgeführt.

Da die Abwässer aus der milchverarbeitenden Industrie mikrobiologisch gut abbaubar sind und in der Folge schnell zur Ausbildung unangenehmer Gerüche neigen, wird die Abluft der Anlagenkomponenten, einschließlich der Speicher- und Pufferbehälter mittels eines Photoionisationsverfahrens gereinigt.

### Bezugszeichenliste

- 1: Elektrodialyseeinheit; Elektrodialyse 2 straßig
- 2: Pufferbehälter; Pufferbehälter 2, V=3026 m³
- 3: Schlammpufferbehälter; Pufferbehälter 3 (Schlamm), V=455 m³
- 4: Flotatpufferbehälter; Pufferbehälter 4 (Flotat), V=369 m³
- 5: Konzentratpufferbehälter; Pufferbehälter 5 (Konzentrat), V=434 m³
- 6: Kationenaustauscher; L4 Kationenaustauscher (151 m³d)
- 6.1: Kationenaustauscherpufferbehälter; Pufferbehälter 1.1, V=300 m³
- 7: Anionenaustauscher; L5 Anionenaustauscher (119 m³d)
- 7.1: Anionenaustauscherpufferbehälter; Pufferbehälter 1.2, V=300 m³
- 8: Umkehrosmoseeinheit; L6 Umkehrosmose (231 m³d)
- 8.1: Umkehrosmoseeinheitpufferbehälter; Pufferbehälter 1.3, V=300 m³
- 9: Havariespeicher; Havariespeicher, V=1000 m³
- 10: Denitrifikationsbehälter; Denibecken, V=1000 m³
- 11: Flotation 1, Flotationsbehälter
- 12: Flotation 2, Flotationsbehälter
- 13: Gasbehandlung, Gasverwertung, BHKW
- 14: Anaerobreaktor; Anaerobreaktor R2S, 1 straßig, V=471 m³
- 15: MAP Magnesiumammoniumphosphatverwertung; MAP (Verwertung)
- 16: MAP-Fällungseinheit; MAP Fällung (2 straßig), V=2x290 m³
- 17: SBR-Einheit; SBR (2 straßig), V=2x2.475 m³
- 18: Ablaufspeicher; Ablaufspeicher, V=1.000 m³
- 19: Ablauf
- 20: Abwasserteilstrom, Zulauf Trockenwerk; L 1/3 Trockenwerk (1097 m³/d)
- 21: Abwasserteilstrom, Zulauf Käserei; L2 Käserei (700 m³/d)
- 22: Abwasserteilstrom, Zulauf Kationenaustauscher
- 23: Abwasserteilstrom, Zulauf Anionenaustauscher
- 24: Abwasserteilstrom, Zulauf Umkehrosmose

## Patentansprüche

1. Abwasserbehandlungsanordnung zur effizienten Reinigung von unterschiedlich belasteten Abwasserteilströmen (20, 21, 22, 23, 24), insbesondere von Industrieabwässern, **gekennzeichnet durch** die folgenden Komponenten:
- Eine Elektrodialyseeinheit (1)
- Einen Havariespeicher (9),
- Einen Pufferbehälter (2), wobei
- der Pufferbehälter (2) von Abwasserteilströmen (23, 24) indirekt über die Elektrodialyseeinheit (1) und direkt erreichbar ausgebildet ist und dass
- der Pufferbehälter (2) von den Abwasserteilströmen (20, 21) indirekt über den Havariespeicher (9) und direkt erreichbar ausgebildet ist und dass
- Nach dem Pufferbehälter (2) ein erster Flotationsbehälter (11), ein Anaerobreaktor (14) und eine SBR-Einheit (17) vor dem Ablauf (19) in Reihe geschaltet angeordnet sind.

2. Abwasserbehandlungsanordnung nach Anspruch 1, **dadurch gekennzeichnet, dass** parallel zum Havariespeicher (9) ein Denitrifikationsbehälter (10) mit nachgeschaltetem zweiten Flotationsbehälter (12) angeordnet ist, wobei der zweite Flotationsbehälter (12) mit dem Havariebehälter (9) und/oder dem Pufferbehälter (2) verbunden ausgeführt ist.

3. Abwasserbehandlungsanordnung nach Anspruch 1 oder 2, **dadurch gekennzeichnet, dass** zwischen dem Anaerobreaktor (14) und der SBR-Einheit (17) eine Magnesiumammoniumphosphat (MAP)-Fällungseinheit (16) mit einer MAP Magnesiumammoniumphosphatverwertung (15) angeordnet ist.

4. Abwasserbehandlungsanordnung nach einem der Ansprüche 1 bis 3, **dadurch gekennzeichnet, dass** nach Elektrodialyseeinheit (1) ein Konzentratpufferbehälter (5) und/oder nach dem ersten Flotationsbehälter (11) ein Flotatpufferbehälter (4) und/oder nach dem Anaerobreaktor (14) eine Gasbehandlung, Gasverwertung, Blockheizkraftwerk (BHKW) (13) angeordnet sind.

5. Abwasserbehandlungsanordnung nach einem der Ansprüche 1 bis 4, **dadurch gekennzeichnet, dass** die MAP-Fällungseinheit (16) und/oder die SBR-Einheit (17) zweistraßig für das wechselweise Betreiben der Einheiten (16, 17) für den quasikontinuierlichen Betrieb ausgebildet sind.

6. Abwasserbehandlungsanordnung nach einem der Ansprüche 1 bis 5, **dadurch gekennzeichnet, dass** ein Schlammpufferbehälter (3) und/oder ein Ablaufspeicher (18) vom Ablauf (19) für das Klarwasser nach der SBR-Einheit (17) angeordnet sind.

7. Abwasserbehandlungsanordnung nach einem der Ansprüche 1 bis 6, **dadurch gekennzeichnet, dass** der Ablaufspeicher (18) derart dimensioniert ist, dass im Regelbetrieb der Abwasserbehandlungsanordnung die Anlage nur zu 50 % befüllt ist.

8. Abwasserbehandlungsanordnung nach einem der Ansprüche 1 bis 7, **dadurch gekennzeichnet, dass** zwischen dem Ablaufspeicher (18) eine Rückpumpleitung für den Havariefall in den Havariespeicher (9) angeordnet ist.

9. Modulares Verfahren zur effizienten Reinigung von unterschiedlich belasteten Abwasserteilströmen in einer Abwasserbehandlungsanordnung nach einer der vorangegangenen Ansprüche, **dadurch gekennzeichnet, dass** eine separate Erfassung der einzelnen Abwasserteilströme (20, 21, 22, 23, 24) durchgeführt wird und dass die Abwasserteilströme (20, 21, 22, 23, 24) als Teilströme modular separat behandelt und je nach Beschaffenheit nachfolgend zusammengeführt und weiterbehandelt werden.

10. Modulares Verfahren zur effizienten Reinigung von unterschiedlich belasteten Abwässern nach Anspruch 9, **dadurch gekennzeichnet, dass** in Abhängigkeit der Eigenschaften des Abwasserteilstromes
a) Eine Elektrodialyse zur Reduzierung der Chloridfracht um 1/3 und der Kaliumfracht um 2/3 gegenüber dem Ausgangswert nur für einen Abwasserteilstrom erfolgt,
b) Eine Flotation von ungelösten Stoffen erfolgt,
c) Eine anaerobe Abwasserbehandlung zur Erzeugung von Biogas als Wertstoff aus einem salzreichen Substrat erfolgt,
d) Eine MAP- Fällung zur Erzeugung von Magnesiumammoniumphosphat als Wertstoff erfolgt und dass
e) Eine aerobe Abwasserbehandlung im SBR- Verfahren unter weitergehender P- Elimination in einem salzreichen Substrat erfolgt.

11. Verfahren nach Anspruch 9 oder 10, **dadurch gekennzeichnet, dass** der behandelte Abwasserstrom vor dem Ablauf filtriert wird.

12. Verfahren nach einem der Ansprüche 9 bis 11, **dadurch gekennzeichnet, dass** eine Abluftbehandlung sowie eine Entschwefelung des bei der anaeroben Abwasserbehandlung entstehenden Biogases erfolgt.

13. Verfahren nach einem der Ansprüche 9 bis 12, **dadurch gekennzeichnet, dass** in Verfahrensschritt b) eine Druckentspannungsflotation ausgeführt wird.

14. Verfahren nach einem der Ansprüche 9 bis 13, **dadurch gekennzeichnet, dass** in Abhängigkeit gemessener Phosphorkonzentrationen mittels simultaner Fällung weitere Phosphorverbindungen eliminiert werden.

## Claims

1. Wastewater treatment assembly for the efficient purification of partial wastewater streams - polluted to different degrees - (20, 21, 22, 23, 24), in particular of industrial effluents, **characterised by** the following components:
- an electrodialysis unit (1)
- an emergency reservoir (9),
- a buffer tank (2), wherein
- the buffer tank (2) is designed indirectly reachable via the electrodialysis unit (1) and directly reachable by partial wastewater streams (23, 24) and that
- the buffer tank (2) is designed indirectly reachable via the emergency reservoir (9) and directly reachable by the partial wastewater streams (20, 21), and that
- after the buffer tank (2) a first flotation vessel (11), an anaerobic reactor (14) and an SBR unit (17) are connected in series before the outflow (19).

2. Wastewater treatment assembly in accordance with Claim 1, **characterised in that,** parallel to the emergency reservoir (9), a denitrification tank (10) with a downstream, second flotation vessel (12) is arranged, wherein the second flotation vessel (12) is designed connected to the emergency tank (9) and/or the buffer tank (2).

3. Wastewater treatment assembly in accordance with Claim 1 or 2, **characterised in that,** between the anaerobic reactor (14) and the SBR unit (17), a magnesium ammonium phosphate (MAP) precipitation unit (16) with an MAP magnesium ammonium phosphate recovery system (15) is arranged.

4. Wastewater treatment assembly in accordance with one of Claims 1 to 3, **characterised in that** after electrodialysis unit (1), a concentrate buffer tank (5), and/or after the first flotation vessel (11) a flotate buffer tank (4), and/or after the anaerobic reactor (14) a gas treatment system, gas recovery system, combined heat and power unit (CHP) (13) are arranged.

5. Wastewater treatment assembly in accordance with one of Claims 1 to 4, **characterised in that** the MAP precipitation unit (16) and/or the SBR unit (17) have a two-line design for alternate operation of the units (16, 17) for virtually continuous operation.

6. Wastewater treatment assembly in accordance with one of Claims 1 to 5, **characterised in that** a sludge buffer tank (3) and/or an outflow reservoir (18) from the outflow (19) for the clear water are arranged after the SBR unit (17).

7. Wastewater treatment assembly in accordance with one of Claims 1 to 6, **characterised in that** the outflow reservoir (18) has dimensions such that during normal operation of the wastewater treatment assembly, the facility is only 50% filled.

8. Wastewater treatment assembly in accordance with one of Claims 1 to 7, **characterised in that** between the outflow reservoir (18), a return pump line is, for emergencies, arranged flowing into the emergency reservoir (9).

9. Modular method for the efficient purification of partial wastewater streams - polluted to different degrees - in a wastewater treatment arrangement in accordance with one of the preceding Claims, **characterised in that** separate collection of the individual partial wastewater streams (20, 21, 22, 23, 24) is performed and that the partial wastewater streams (20, 21, 22, 23, 24) are treated separately in a modular manner and depending on their characteristics are subsequently merged and treated further:

10. Modular method for the efficient purification of partial wastewater streams - polluted to different degrees - in accordance with Claim 9, **characterised in that** depending on the characteristics of the partial wastewater stream
a) Electrodialysis to reduce the chloride load by 1/3 and the potassium load by 2/3 compared with the starting value is performed for one partial wastewater stream only,
b) Flotation of undissolved substances takes place,
c) Anaerobic wastewater treatment takes place for the generation of biogas as a valuable material from a salt-rich substrate,
d) MAP precipitation takes place for the generation of magnesium ammonium phosphate as a valuable material and that
e) Aerobic wastewater treatment using the SBR process takes place with continuing P-elimination in a salt-rich substrate.

11. Method in accordance with Claim 9 or 10, **characterised in that** the treated wastewater stream is filtered before the outflow.

12. Method in accordance with one of Claims 9 to 11, **characterised in that** waste air treatment and also desulphurisation of the biogas generated during the anaerobic wastewater treatment take place.

13. Method in accordance with one of Claims 9 to 12, **characterised in that** in method step b), pressure relief flotation is carried out.

14. Method in accordance with one of Claims 9 to 13, **characterised in that,** depending on the concentrations of phosphorus measured, by means of simultaneous precipitation further phosphorus compounds are eliminated.

## Revendications

1. Ensemble de traitement des eaux usées pour une épuration efficace de flux partiels d'eaux usées différemment pollués (20, 21, 22, 23, 24), notamment d'eau usées industrielles, **caractérisé par** les composants suivants :
- Une unité d'électrodialyse (1),
- Un accumulateur pour avarie (9),
- Un réservoir tampon (2), sachant que
- le réservoir tampon (2) est configuré accessible à des flux partiels d'eaux usées (23, 24) indirectement via l'unité d'électrodialyse (1) et directement, et que
- le réservoir tampon (2) est configuré accessible à des flux partiels d'eaux usées (20, 21) indirectement via l'accumulateur d'avarie (9) et directement, et que
- en aval du réservoir tampon (2) sont disposés en série un premier réservoir de flotation (11), un réacteur anaérobie (14) et une unité SBR (17) en amont de l'écoulement (19).

2. Ensemble de traitement des eaux usées selon la revendication 1, **caractérisé en ce que** parallèlement à l'accumulateur pour avarie (9) est disposé un réservoir de dénitrification (10) avec second réservoir de flottation (12) en aval, sachant que le deuxième réservoir de flottation (12) est réalisé relié avec l'accumulateur pour avarie (9) et/ou le réservoir tampon (2).

3. Ensemble de traitement selon la revendication 1 ou 2, **caractérisé en ce qu**'entre le réacteur anaérobie (14) et l'unité SBR (17) est disposée une unité de précipitation du magnésium ammonium phosphate (MAP) (16) avec dispositif de récupération du magnésium ammonium phosphate (MAP) (15).

4. Ensemble de traitement des eaux usées selon l'une des revendications 1 à 3, **caractérisé en ce qu**'en aval de l'unité d'électrodialyse (1) est disposé un réservoir tampon de concentré (5) et/ou en aval du premier réservoir de flottation (11) sont disposés un réservoir tampon du flottat (4) et/ou, après le réacteur anaérobie (14), un dispositif de traitement des gaz, un dispositif de récupération des gaz, une centrale de cogénération (13).

5. Ensemble de traitement des eaux usées selon l'une des revendications 1 à 4, **caractérisé en ce que** l'unité de précipitation MAP (16) et/ou l'unité SBR (17) sont configurées à deux voies pour l'exploitation alternative des unités (16, 17) en service quasi-continu.

6. Ensemble de traitement des eaux usées selon l'une des revendications 1 à 5, **caractérisé en ce qu**'un réservoir tampon de boues (3) et/ou un réservoir d'écoulement (18) sont disposés depuis l'écoulement (19) pour l'eau claire en aval de l'unité SBR (17).

7. Ensemble de traitement des eaux usées selon l'une des revendications 1 à 6, **caractérisé en ce que** le réservoir d'écoulement (18) est dimensionné de sorte que lorsque l'ensemble de traitement des eaux usées se trouve en service normal, l'installation n'est remplie qu'à 50 %.

8. Ensemble de traitement des eaux usées selon l'une des revendications 1 à 7, **caractérisé en ce qu'**entre le réservoir d'écoulement (18) une conduite de rétropompage est disposée, pour le cas d'avarie, dans l'accumulateur pour avarie (9).

9. Procédé modulaire pour le nettoyage efficace de flux partiels d'eaux usées diversement pollués dans un ensemble de traitement des eaux usées selon l'une des revendications précédentes, **caractérisé en ce qu'**une saisie séparée des flux partiels (20, 21, 22, 23, 24) individuels d'eaux usées a lieu, et que les flux partiels d'eaux usées (20, 21, 22, 23, 24) sont traités séparément de façon modulaire, en tant que flux partiels, et qu'ensuite ils sont réunis en fonction de leur nature et que leur traitement se poursuit.

10. Procédé modulaire pour le nettoyage efficace d'eaux usées diversement polluées selon la revendication 9, **caractérisé en ce qu'**en fonction des propriétés du flux d'eaux usées
a) Une électrodialyse a lieu pour réduire la charge de chlorure d'un tiers et la charge de potassium des deux tiers par rapport à la valeur de départ uniquement pour un flux partiel d'eaux usées,
b) Une flottation des substances non dissoutes a lieu,
c) Un traitement anaérobie des eaux usées a lieu pour générer du biogaz en tant que fluide de valeur en provenance d'un substrat riche en sel,
d) Une précipitation du MAP a lieu pour générer du magnésium ammonium phosphate comme matière de valeur, et **en ce que**,
e) Un traitement anaérobie des eaux usées a lieu selon le procédés SBR avec élimination supplémentaire du P dans un substrat riche en sel.

11. Procédé selon la revendication 9 ou 10, **caractérisé en ce que** le flux d'eaux usées traitées est filtré avant l'écoulement.

12. Procédé selon l'une des revendications 9 à 11, **caractérisé en ce qu'**ont lieu un traitement de l'air sortant ainsi qu'une désulfuration du biogaz engendré pendant le traitement anaérobie des eaux usées.

13. Procédé selon l'une des revendications 9 à 12, **caractérisé en ce que** dans l'étape b) du procédé est exécutée une flottation de détente.

14. Procédé selon l'une des revendications 9 à 13, **caractérisé en ce qu'**en fonction de la concentration mesurée du phosphore, d'autres composés phosphorés sont éliminés au moyen d'une précipitation simultanée.
